# EUROPÄISCHE PATENTSCHRIFT

(11) **EP 2 463 538 B1**
(45) Veröffentlichungstag und Bekanntmachung des Hinweises auf die Patenterteilung: **25.09.2013**
(21) Anmeldenummer: 10015128.1
(22) Anmeldetag: 30.11.2010
(51) Int. Cl.: F16D 1/095

(54) **Schrumpfscheibe zur reibschlüssigen Verbindung von rotierenden Maschinenteilen**
Shrink disc for friction-type connection of rotating machine components
Disque de serrage pour la liaison par friction d'éléments mécaniques rotatifs

(43) Veröffentlichungstag der Anmeldung: 13.06.2012
(73) Patentinhaber: Siemens Aktiengesellschaft, 80333 München (DE)
(72) Erfinder: Mahn, Gunter, 04618 Ziegelheim (DE)

(56) Entgegenhaltungen:
- DE-A1- 2 514 313
- DE-A1- 3 100 865
- JP-A- 6 249 253
- US-A- 2 760 800

## Beschreibung

Die Erfindung betrifft eine Schrumpfscheibe zur reibschlüssigen Verbindung von rotierenden Maschinenteilen. Derartige Maschinenteile sind beispielsweise Wellen, Radnaben oder Flansche. Die Schrumpfscheibe umfaßt einen Außenring und einen Innenring, die an einer konischen Kontaktfläche miteinander in Verbindung stehen und gegeneinander verspannbar sind.

In DE 10 2004 019 424 A1 ist eine Schrumpfscheibe zur reibschlüssigen Verbindung zweier Wellen beschrieben, die einen Außenring und einen Innenring umfaßt, die sich entlang einer Kegelfläche berühren. Der Außenring ist mit sich axial erstreckenden Gewindebohrungen mit Innengewinde zur Aufnahme von Halteschrauben versehen. Zur Montage sind stirnseitig mehrere Zylindereinheiten an die Schrumpfscheibe anschließbar, die jeweils aus einem Zylinder und einer Kolbenstange bestehen. Die Kolbenstange ragt aus dem Zylinder heraus und ist mit einem dem Innengewinde der Gewindebohrung des Außenringes entsprechenden Außengewinde versehen.

Aus EP 1 884 672 A2 ist eine Schrumpfscheibe bekannt, die eine Preßverbindung zwischen zwei konzentrischen Wellen herstellt. Die Schrumpfscheibe umfaßt einen Innenring und einen Außenring, die entlang einer kegeligen Berührungsfläche über eine stirnseitig angeordnete, sich axial erstreckende Verschraubung gegeneinander verspannbar angeordnet sind. Dabei sind der Innenring bzw. der Außenring aus einem Gußeisenwerkstoff gefertigt.

Konventionelle Schrumpfscheiben mit Axialverschraubungen erfordern zur Montage oder Demontage aufgrund einer ungünstigen Zugänglichkeit der Axialverschraubungen verhältnismäßig viel Bauraum. Üblicherweise muß hierzu mindestens soviel Bauraum vorhanden sein wie die Axialverschraubungen lang sind. Hieraus resultieren erhöhte erforderliche Wellenlängen, die wiederum zu erhöhten Biegemomenten führen. Erhöhte Biegemomente können durch größere, teuere Lager kompensiert werden oder bewirken eine verkürzte Lagerlebensdauer.

DE 25 14 313 A1, die als nächstliegender Stand der Technik angesehen wird, offenbart eine reibschlüssige lösbare Verbindung von zwei Wellen oder einer Welle mit einer Nabe mit einem ungeteilten, die Welle umschließenden Spannsitz (Hülse oder Nabe), auf welchen Spannscheiben über gleichmäßig am Außenumfang verteilte, radial gerichtete Schrauben oder Bolzen gespannt werden. Der Spannsitz (Hülse oder Nabe) wird in bekannter Art durch aufgeschobene dünnwandige Druckringe zusammengedrückt, welche einen konisch entgegengesetzten Außenmantel aufweisen. Auf dem Außenmantel der Druckringe lassen sich in bekannter Weise Spannscheiben axial verschieben, bewirkt durch radial gerichtete, am Außenumfang gleichmäßig verteilte Spannschrauben oder Bolzen, welche Kulissensteine auf Konen an den Spannscheiben radial nach außen ziehen.

Ein Nachteil dieser Schrumpfscheibe liegt darin, dass beim Anziehen der Spannschrauben die Spannscheiben 3 gegen eine Reibung zwischen sich senkrecht zur Schraubenkraftrichtung erstreckenden Kontaktflächen der Spannscheiben 3 und einem Auflager 6 für die Spannschrauben bewegt werden müssen. Da die Reibungskraft mit der durch das Anziehen der Spannschrauben hervorgerufenen Normalkraft auf die Kontaktflächen zunimmt, erschwert dies ein Verspannen der Schrumpfscheibe.

Der vorliegenden Erfindung liegt die Aufgabe zugrunde, eine Schrumpfscheibe anzugeben, die nur einen geringen Bauraum zur Montage oder Demontage erfordert.

Diese Aufgabe wird erfindungsgemäß durch eine Schrumpfscheibe mit den in Anspruch 1 angegebenen Merkmalen gelöst. Vorteilhafte Weiterbildungen der vorliegenden Erfindung sind in den abhängigen Ansprüchen angegeben.

Die erfindungsgemäße Schrumpfscheibe zur reibschlüssigen Verbindung von rotierenden Maschinenteilen umfaßt zumindest einen Außenring und einen Innenring, die an zumindest einer sich im Wesentlichen axial erstreckenden konischen Kontaktfläche miteinander in Verbindung stehen. Dabei umfaßt der Außenring zwei axial beabstandete Ringelemente. Außerdem ist ein zwischen den beiden Ringelementen angeordneter Zwischenring vorgesehen, der mit den Ringelementen jeweils an einer sich im Wesentlichen radial erstreckenden konischen Kontaktfläche in Verbindung steht und entlang seines Umfangs mehrere sich radial erstreckende Durchgangs- bzw. Gewindebohrungen aufweist. Der Zwischenring bildet Auflageflächen für Köpfe der Stellschrauben. Der Zwischenring kann beispielsweise geschlitzt sein oder mehrere separate Ringsegmente umfassen. Darüber hinaus sind mehrere Stellschrauben durch Öffnungen am Außenring in die Durchgangs- bzw. Gewindebohrungen eingeführt. Durch Verdrehung der Stellschrauben sind der Zwischenring radial und die beiden Ringelemente axial verschiebbar. Auf diese Weise ermöglicht die vorliegende Erfindung eine bessere Zugänglichkeit von Stellschrauben bei Schrumpfscheiben insbesondere an Antriebswellen zwischen Getrieben und Motoren oder Arbeitsmaschinen. Durch eine verbesserte Zugänglichkeit der Stellschrauben ist eine Einsparung von Bauraum möglich, was zu einer reduzierten axialen Abmessung eines Antriebsstrangs führt.

Entsprechend einer vorteilhaften Weiterbildung der vorliegenden Erfindung sind zwischen den beiden Ringelementen des Außenrings zwei Zwischenringe angeordnet, die jeweils mit den Ringelementen an einer sich im Wesentlichen radial erstreckenden konischen Kontaktfläche in Verbindung stehen und entlang ihres Umfangs mehrere sich radial erstreckende Durchgangs- bzw. Gewindebohrungen aufweisen.

Entsprechend einer nicht erfindungsgemäßen Ausgestaltung einer Schrumpfscheibe kann der Innenring zwei axial beabstandete Ringelemente umfassen. In diesem Fall ist zwischen den beiden Ringelementen des Innenrings ein Zwischenring angeordnet, der jeweils mit den Ringelementen an einer sich im Wesentlichen radial erstreckenden konischen Kontaktfläche in Verbindung steht und entlang seines Umfangs mehrere sich radial erstreckende Gewindebohrungen aufweist.

Die vorliegende Erfindung wird nachfolgend an Ausführungsbeispielen anhand der Zeichnung näher erläutert. Es zeigt
- Figur 1: ein erstes Ausführungsbeispiel der Erfindung mit einer radial verschraubbaren Schrumpfscheibe mit einem zweiteiligen Außenring sowie einem äußeren und einem inneren Zwischenring,
- Figur 2: eine nicht erfindungsgemäße radial verschraubbare Schrumpfscheibe mit einem zweiteiligen Innenring und einem Zwischenring, und
- Figur 3: ein weiteres Ausführungsbeispiel der Erfindung einer radial verschraubbaren Schrumpfscheibe mit einem zweiteiligen Außenring und einem Zwischenring.

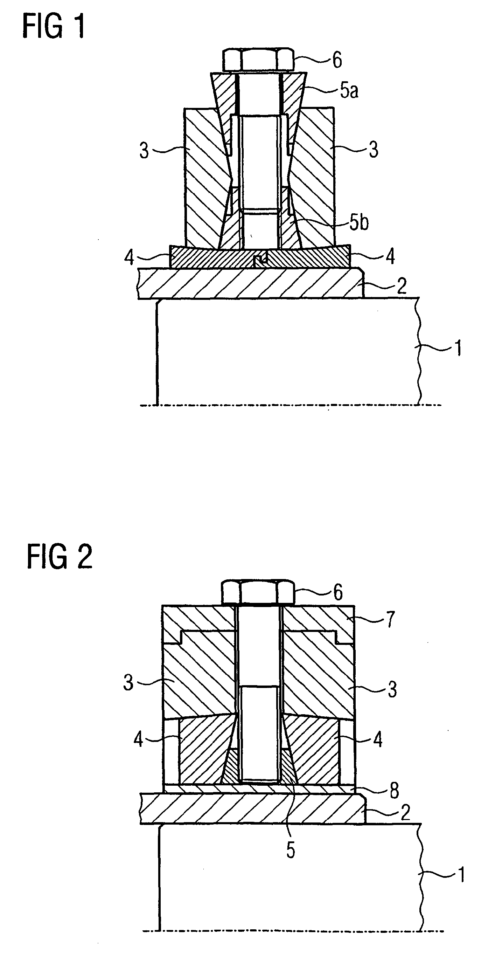

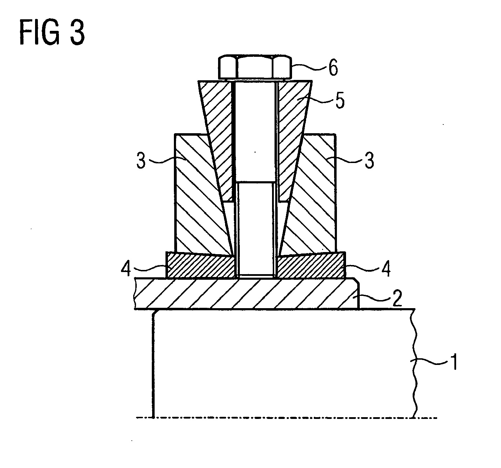

Sämtliche der in den Figuren 1 bis 3 dargestellten Schrumpfscheiben zur reibschlüssigen Verbindung einer Welle 1 mit einer diese umgebenden Hohlwelle 2 umfassen jeweils zumindest einen Außenring 3 und einem Innenring 4. Der Außenring 3 und der Innenring 4 stehen an zumindest einer sich im Wesentlichen axial erstreckenden konischen Kontaktfläche miteinander in Verbindung. Zumindest der Außenring 3 oder der Innenring 4 umfaßt zwei axial beabstandete Ringelemente. Entsprechend der in Figur 2 dargestellten, nicht erfindungsgemäßen Schrumpfscheibe umfassen sowohl der Außenring 3 als auch der Innenring 4 zwei axial beabstandete Ringelemente. Dagegen umfaßt bei den in Figur 1 und 3 dargestellten Ausführungsbeispielen jeweils nur der Außenring 3 zwei axial beabstandete Ringelemente.

Des Weiteren weisen sämtliche der in den Figuren 1 bis 3 dargestellten Schrumpfscheiben zumindest einen zwischen den beiden Ringelementen angeordneten Zwischenring 5, 5a, 5b auf, der mit den Ringelementen jeweils an einer sich im Wesentlichen radial erstreckenden konischen Kontaktfläche in Verbindung steht und entlang seines Umfangs mehrere sich radial erstreckende Durchgangs- bzw. Gewindebohrungen aufweist. Vorzugsweise ist der zumindest eine Zwischenring 5, 5a, 5b geschlitzt oder umfaßt mehrere separate Ringsegmente. Durch Öffnungen am Außenring 3 sind mehrere Stellschrauben 6 in die Durchgangs- bzw. Gewindebohrungen eingeführt. Durch Verdrehung der Stellschrauben 6 sind der Zwischenring 5, 5a, 5b radial und die beiden Ringelemente axial verschiebbar. Dabei werden von den Stellschrauben 6 ausgeübte Kräfte zunächst in axiale Richtung umgeleitet, woraus dann eine radial wirkende Verspannung zwischen dem Außenring 3 und dem Innenring 4 resultiert. Durch die Verspannung übt der Innenring 4 eine hohe Flächenpressung auf die Verbindung zwischen Welle 1 und Hohlwelle 2 aus.

Bei dem in Figur 1 dargestellten Ausführungsbeispiel umfaßt der Außenring 3 zwei axial beabstandete Ringelemente. Zwischen den beiden Ringelementen des Außenrings 3 sind zwei Zwischenringe 5a, 5b angeordnet. Die beiden Zwischenringe 5a, 5b stehen jeweils mit den Ringelementen an einer sich im Wesentlichen radial erstreckenden konischen Kontaktfläche in Verbindung und weisen entlang ihres Umfangs mehrere sich radial erstreckende Durchgangs- bzw. Gewindebohrungen auf. Dabei weist ein erster äußerer Zwischenring 5a entlang seines Umfangs mehrere sich radial erstreckende Durchgangsbohrungen für die Stellschrauben 6 auf und bildet Auflageflächen für Köpfe der Stellschrauben 6. Ein zweiter innerer Zwischenring 5b weist dagegen entlang seines Umfangs mehrere sich radial erstreckende Gewindebohrungen für die Stellschrauben 6 auf. Der erste Zwischenring 5a weist eine radial nach innen abnehmende axiale Ausdehnung auf, während der zweite Zwischenring 5b eine radial nach außen abnehmende axiale Ausdehnung aufweist. Des Weiteren weist der Außenring 3 eine axial zu seinen Stirnseiten abnehmende Wandstärke auf, während der Innenring 4 eine axial zu seinen Stirnseiten zunehmende Wandstärke aufweist.

Der Innenring 4 der Schrumpfscheibe gemäß Figur 1 ist im vorliegenden Ausführungsbeispiel zweiteilig ausgestaltet und umfaßt zwei miteinander verbundene Ringabschnitte. Damit sich die beiden Ringabschnitte beim Spannen der Schrumpfscheibe nicht axial nach außen bewegen, sind sie mittels einer Doppel-Feder-Nut-Verbindung miteinander verbunden. Hierbei weisen beide Ringabschnitte in einem Verbindungsbereich jeweils eine umlaufende Nut und eine Feder auf, die jeweils in die Nut am anderen Ringabschnitt greift. Grundsätzlich könnten die Ringabschnitte auch mittels eines Bajonettverschlusses oder durch Aufkleben auf die Hohlwelle 2 miteinander verbunden werden.

In Figur 2 ist eine nicht erfindungsgemäße Schrumpfscheibe dargestellt, bei der der Außenring 3 zwei axial beabstandete Ringelemente umfaßt, deren Abstand größer als ein Schaftdurchmesser der Stellschrauben 6 ist. Die Ringelemente des Außenrings 3 sind von einer diese radial und axial fixierenden Außenhülse 7 umgeben. Die Außenhülse 7 weist entlang ihres Umfangs mehrere sich radial erstreckende Durchgangsbohrungen für die Stellschrauben 6 auf und bildet Auflageflächen für Köpfe der Stellschrauben 6. Darüber hinaus weist der Zwischenring 5 bei der in Figur 2 dargestellten Schrumpfscheibe entlang seines Umfangs mehrere sich radial erstreckende Gewindebohrungen für die Stellschrauben 6 auf.

Alternativ zu einer zweiteiligen Ausgestaltung mit zwei axial beabstandeten Ringelementen und einer diese fixierenden Au-ßenhülse 7 könnte der Außenring 3 entlang seines Umfangs mehrere sich radial erstreckende Durchgangsbohrungen für die Stellschrauben 6 aufweisen und Auflageflächen für Köpfe der Stellschrauben 6 bilden. Auch in diesem Fall weist der Zwischenring 5 entlang seines Umfangs mehrere sich radial erstreckende Gewindebohrungen für die Stellschrauben 6 auf.

Der Innenring 4 der Schrumpfscheibe entsprechend Figur 2 umfaßt zwei axial beabstandete Ringelemente, zwischen denen der Zwischenring 5 angeordnet ist. Dabei steht der Zwischenring 5 jeweils mit den Ringelementen des Innenrings 4 an einer sich im Wesentlichen radial erstreckenden konischen Kontaktfläche in Verbindung. Des Weiteren weist der Zwischenring 5 eine radial nach außen abnehmende axiale Ausdehnung auf. Darüber hinaus weist der Außenring 3 der in Figur 2 dargestellten Schrumpfscheibe eine axial zu seinen Stirnseiten zunehmende Wandstärke auf, während der Innenring 4 eine axial zu seinen Stirnseiten abnehmende Wandstärke aufweist. Außerdem ist an einer Innenwand des Innenrings 3 eine Innenhülse 8 als Verbindungselement zur Hohlwelle 2 und der mit dieser reibschlüssig zu verbindenden Welle 1 vorgesehen. Bei entsprechender Werkstoffauswahl für die Hohlwelle 2 kann die Innenhülse 8 auch entfallen.

Bei dem in Figur 3 dargestellten Ausführungsbeispiel umfaßt der Außenring 3 zwei axial beabstandete Ringelemente, zwischen denen der Zwischenring 5 angeordnet ist. Der Zwischenring 5 steht jeweils mit den Ringelementen an einer sich im Wesentlichen radial erstreckenden konischen Kontaktfläche in Verbindung und weist entlang seines Umfangs mehrere sich radial erstreckende Durchgangsbohrungen für die Stellschrauben 6 auf. Außerdem bildet der Zwischenring 5 bei der in Figur 3 dargestellten Schrumpfscheibe Auflageflächen für Köpfe der Stellschrauben 6. Entsprechend dazu weist der Innenring 4 entlang seines Umfangs mehrere sich radial erstreckende Gewindebohrungen für die Stellschrauben 6 auf. Darüber hinaus weist der Zwischenring 5 entsprechend Figur 3 eine radial nach innen abnehmende axiale Ausdehnung auf. Des Weiteren weist der Außenring 3 eine axial zu seinen Stirnseiten abnehmende Wandstärke auf, während der Innenring 4 eine axial zu seinen Stirnseiten zunehmende Wandstärke aufweist.

Der Innenring 4 der in Figur 3 dargestellten Schrumpfscheibe ist vorzugsweise zweiteilig ausgeführt und umfaßt zwei Ringabschnitte, die axial miteinander verschraubt sind oder mittels einer in Figur 1 dargestellten Doppel-Feder-Nut-Verbindung miteinander verbunden sind. Auf diese Weise können Au-ßenring 3 und Zwischenring 5 einfach um den Innenring 4 montiert werden.

Die Anwendung der vorliegenden Erfindung ist nicht auf die beschriebenen Ausführungsbeispiele beschränkt.

## Patentansprüche

1. Schrumpfscheibe zur reibschlüssigen Verbindung von rotierenden Maschinenteilen (1, 2) mit
- zumindest einem Außenring (3) und einem Innenring (4), die an zumindest einer sich im Wesentlichen axial erstreckenden konischen Kontaktfläche miteinander in Verbindung stehen, wobei der Außenring (3) zwei axial beabstandete Ringelemente umfaßt,
- einem zwischen den beiden Ringelementen angeordneten Zwischenelement (5, 5a), das mit den Ringelementen jeweils an einer sich im Wesentlichen radial erstreckenden konischen Kontaktfläche in Verbindung steht und entlang seines Umfangs mehrere sich radial erstreckende Durchgangs- und/oder Gewindebohrungen aufweist, und
- mehreren durch Öffnungen am Außenring (3) in die Durchgangs- und/oder Gewindebohrungen eingeführten Stellschrauben (6), durch deren Verdrehung das Zwischenelement (5, 5a) radial und die beiden Ringelemente axial verschiebbar sind,
**dadurch gekennzeichnet, dass** das Zwischenelement (5, 5a) ein Zwischenring ist und Auflageflächen für Köpfe der Stellschrauben (6) bildet.

2. Schrumpfscheibe nach Anspruch 1,
bei welcher der Zwischenring (5, 5a) geschlitzt ist oder mehrere separate Ringsegmente umfaßt.

3. Schrumpfscheibe nach einem der Ansprüche 1 oder 2,
bei welcher zwischen den beiden Ringelementen des Außenrings (3) zwei Zwischenringe (5a, 5b) angeordnet sind, die jeweils mit den Ringelementen an einer sich im Wesentlichen radial erstreckenden konischen Kontaktfläche in Verbindung stehen und entlang ihres Umfangs mehrere sich radial erstreckende Durchgangs- und/oder Gewindebohrungen aufweisen.

4. Schrumpfscheibe nach Anspruch 3,
bei welcher ein erster äußerer Zwischenring (5a) entlang seines Umfangs mehrere sich radial erstreckende Durchgangsbohrungen aufweist und Auflageflächen für Köpfe der Stellschrauben (6) bildet, und bei welcher ein zweiter innerer Zwischenring (5b) entlang seines Umfangs mehrere sich radial erstreckende Gewindebohrungen aufweist.

5. Schrumpfscheibe nach Anspruch 4,
bei welcher der erste Zwischenring (5a) eine radial nach innen abnehmende axiale Ausdehnung aufweist, und bei welcher der zweite Zwischenring (5b) eine radial nach außen abnehmende axiale Ausdehnung aufweist.

6. Schrumpfscheibe nach Anspruch 5,
bei welcher der Außenring (3) eine axial zu seinen Stirnseiten abnehmende Wandstärke aufweist, und bei welcher der Innenring (4) eine axial zu seinen Stirnseiten zunehmende Wandstärke aufweist.

7. Schrumpfscheibe nach einem der Ansprüche 1 oder 2,
bei welcher der Innenring (4) entlang seines Umfangs mehrere sich radial erstreckende Gewindebohrungen aufweist.

8. Schrumpfscheibe nach Anspruch 7,
bei welcher der Zwischenring (5, 5a) eine radial nach innen abnehmende axiale Ausdehnung aufweist.

9. Schrumpfscheibe nach Anspruch 8,
bei welcher der Außenring (3) eine axial zu seinen Stirnseiten abnehmende Wandstärke aufweist, und bei welcher der Innenring (4) eine axial zu seinen Stirnseiten zunehmende Wandstärke aufweist.

## Claims

1. Shrink disk for the frictional connection of rotating machine parts (1, 2), having
- at least an outer ring (3) and an inner ring (4), which are connected together at at least one substantially axially extending conical contact surface, wherein the outer ring (3) comprises two axially spaced-apart ring elements,
- an intermediate element (5, 5a) which is arranged between the two ring elements, is connected to the ring elements in each case at a substantially radially extending conical contact surface and has a plurality of radially extending through-passage bores and/or threaded bores along its circumference, and
- a plurality of adjusting screws (6), which are inserted through openings on the outer ring (3) into the through-passage bores and/or threaded bores, the intermediate element (5, 5a) being radially displaceable and the two ring elements axially displaceable by rotation of said adjusting screws,
- **characterized in that** the intermediate element (5, 5a) is an intermediate ring and forms bearing surfaces for heads of the adjusting screws (6).

2. Shrink disk according to Claim 1,
in which the intermediate ring (5, 5a) is slotted or comprises a plurality of separate ring segments.

3. Shrink disk according to either of Claims 1 and 2,
in which between the two ring elements of the outer ring (3) there are arranged two intermediate rings (5a, 5b) which are connected in each case to the ring elements at a substantially radially extending conical contact surface and have a plurality of radially extending through-passage bores and/or threaded bores along their circumference.

4. Shrink disk according to Claim 3,
in which a first outer intermediate ring (5a) has a plurality of radially extending through-passage bores along its circumference and forms bearing surfaces for heads of the adjusting screws (6), and in which a second inner intermediate ring (5b) has a plurality of radially extending threaded bores along its circumference.

5. Shrink disk according to Claim 4,
in which the first intermediate ring (5a) has an axial extent that decreases radially inwardly, and in which the second intermediate ring (5b) has an axial extent that decreases radially outwardly.

6. Shrink disk according to Claim 5,
in which the outer ring (3) has a wall thickness that decreases axially toward its end sides, and in which the inner ring (4) has a wall thickness that increases axially toward its end sides.

7. Shrink disk according to either of Claims 1 and 2,
in which the inner ring (4) has a plurality of radially extending threaded bores along its circumference.

8. Shrink disk according to Claim 7,
in which the intermediate ring (5, 5a) has an axial extent that decreases radially inwardly.

9. Shrink disk according to Claim 8,
in which the outer ring (3) has a wall thickness that decreases axially toward its end sides, and in which the inner ring (4) has a wall thickness that increases axially toward its end sides.

## Revendications

1. Disque de frettage pour la liaison par friction de parties ( 1,2 ) tournantes de machine comprenant :
- au moins une bague ( 3 ) extérieure et une bague ( 4 ) intérieure, qui sont en liaison mutuelle sur au moins une surface de contact conique s'étendant sensiblement axialement, la bague ( 3 ) extérieure comprenant deux éléments annulaires à distance axialement,
- un élément ( 5, 5a ) intermédiaire, qui est disposé entre les deux éléments annulaires, qui est en liaison avec les éléments annulaires respectivement sur une surface de contact conique s'étendant sensiblement radialement et qui a, le long de son pourtour, plusieurs trous traversant et/ou des taraudages s'étendant radialement et
- plusieurs vis ( 6 ) de réglage, qui sont insérées par des ouvertures de la bague ( 3 ) extérieure dans les trous traversant et/ou les taraudages et par la torsion desquels l'élément ( 5, 5a ) intermédiaire est déplacé radialement et les deux éléments annulaires sont déplacés axialement, **caractérisé en ce que** l'élément ( 5, 5a ) intermédiaire est une bague intermédiaire et forme des surfaces d'appui pour des têtes des vis ( 6 ) de réglage.

2. Disque de frettage suivant la revendication 1,
dans lequel la bague ( 5, 5a ) intermédiaire est fendue ou comprend plusieurs segments annulaires distincts.

3. Disque de frettage suivant l'une des revendications 1 ou 2,
dans lequel il est disposé, entre les deux éléments annulaires de la bague ( 3 ) extérieure, deux bagues ( 5a, 5b ) intermédiaires, qui sont en liaison respectivement avec les éléments annulaires sur une surface de contact conique s'étendant sensiblement radialement et qui ont, le long de leur pourtour, plusieurs trous traversant et/ou taraudages s'étendant radialement.

4. Disque de frettage suivant la revendication 3,
dans lequel une première bague ( 5a ) intermédiaire extérieure a, le long de son pourtour, plusieurs trous traversant s'étendant radialement et forment des surfaces d'appui pour des têtes des vis ( 6 ) de réglage et dans lequel une deuxième bague ( 5b ) intermédiaire intérieure a, le long de son pourtour, plusieurs taraudages s'étendant radialement.

5. Disque de frettage suivant la revendication 4,
dans lequel la première bague ( 5a ) intermédiaire a une étendue axiale diminuant radialement vers l'intérieur et dans lequel la deuxième bague ( 5b ) intermédiaire a une étendue axiale diminuant radialement vers l'extérieur.

6. Disque de frettage suivant la revendication 5,
dans lequel la bague ( 3 ) extérieure a une épaisseur de paroi diminuant axialement vers ses côtés frontaux et dans lequel la bague ( 4 ) intérieure a une épaisseur de paroi augmentant axialement vers ses côtés frontaux.

7. Disque de frettage suivant l'une des revendications 1 ou 2,
dans lequel la bague ( 4 ) intérieure a, le long de son pourtour, plusieurs taraudages s'étendant radialement.

8. Disque de frettage suivant la revendication 7,
dans lequel la bague ( 5, 5a ) intermédiaire a une étendue axiale diminuant radialement vers l'intérieur.

9. Disque de frettage suivant la revendication 8,
dans lequel la bague ( 3 ) extérieure a une épaisseur de paroi diminuant axialement vers ses côtés frontaux et dans lequel la bague ( 4 ) intérieure a une épaisseur de paroi augmentant axialement vers ses côtés frontaux.
